# EUROPÄISCHE PATENTSCHRIFT

(11) **EP 1 059 010 B1**
(45) Veröffentlichungstag und Bekanntmachung des Hinweises auf die Patenterteilung: **02.10.2002**
(21) Anmeldenummer: 99910087.8
(22) Anmeldetag: 28.01.1999
(51) Int. Cl.: H04Q 7/32

(54) **SIM-KARTE MIT TELEFONBUCHEINTRÄGEN FÜR MOBILTELEFONE**
SIM-CARD WITH DIRECTORY ENTRIES FOR MOBILE TELEPHONES
CARTE A MODULE D'IDENTIFICATION D'ABONNE (SIM) AVEC ACCES A L'ANNUAIRE POUR TELEPHONES MOBILES

(30) Priorität: 25.02.1998 DE 19807934
(43) Veröffentlichungstag der Anmeldung: 13.12.2000
(73) Patentinhaber: SIEMENS AKTIENGESELLSCHAFT, 80333 München (DE)
(72) Erfinder: VOLLAND, Rainer, D-80469 München (DE); ADAMEIT, Bernd, D-81371 München (DE); HOMANN, Karsten, D-82067 Ebenhausen (DE)
(86) Internationale Anmeldenummer: DE9900218
(87) Internationale Veröffentlichungsnummer: WO99044378

(56) Entgegenhaltungen:
- EP-A- 0 733 992
- MAZZIOTTO G: "THE SUBSCRIBER IDENTITY MODULE FOR THE EUROPEAN DIGITAL CELLULAR SYSTEM GSM" PROCEEDINGS OF THE NORDIC SEMINAR ON DIGITAL LAND MOBILE RADIO COMMUNICATIONS (DMR), OSLO, JUNE 26 - 28, 1990, Nr. SEMINAR 4, 26. Juni 1990, Seiten 3.1, 1-09, XP000515543 GENERAL DIRECTORATE OF POSTS AND TELECOMMUNICATIONS;FINLAND
- GSM Technical Specification 11.11; Specification of the Subscriber Identity Module - Mobile Equipment (SIM-ME) Interface; Version 5.0.0. Dezember 1995; Seiten 62-64 XP002107246 in der Anmeldung erwähnt
- PATENT ABSTRACTS OF JAPAN vol. 096, no. 008, 30. August 1996 & JP 08 111709 A (FUJI XEROX CO LTD), 30. April 1996
- C.J.Date, An Introduction to Database Systems, Volume 1, 5th edition, READING, ADDISON WESLEY.; US, 1992; pages 753-763; XP002107281

## Beschreibung

Die Erfindung betrifft eine SIM-Karte für Mobiltelefone und insbesondere die Speicherung von Telefonbucheinträgen auf einer SIM-Karte für Mobiltelefone.

Die Zahl der Telefonbucheinträge in Mobiltelefonen nimmt aufgrund der steigenden Kapazität der SIM-Karten ständig zu. So sind derzeit im ADN-Feld bzw. FDN-Feld der SIM-Karte (ADN = Abbreviated Dialling Number, FDN = Fixed Dialling Number) bis zu 255 Einträge speicherbar. Allerdings ist es in den Telefonbüchern derzeitiger SIM-Karten nicht möglich, die Telefonbucheinträge in einer hierarchischen Struktur abzuspeichern, d.h. die Einträge in verschiedenen Ebenen zu organisieren. Die Datenstruktur einer SIM-Karte einschließlich der Definition der ADN- und FDN-Datensätze ist beispielsweise in der GSM-Spezifikation 11.11, Version 5.0.0 vom Dezember 1995 dargelegt.

Telefone, die ihre Einträge hierarchisch organisieren, d.h. mehrere Telefonnummern pro Eintrag ermöglichen, oder auch nur jedem Eintrag eine Bezeichnung, wie beispielsweise Büro oder FAX, zuordnen, speichern daher diese Information nicht auf der SIM-Karte, sondern im Telefongerät selbst. Das hat zur Folge, daß bei einem Kartentausch mit anderen Telefonen, die die genannte Struktur nicht unterstützen, ernsthafte Probleme auftreten. Beispielsweise kann durch Ändern der Speicherplatznummer in einem anderen Telefon beim Lesen der SIM-Karte durch das Telefon, das die Bezeichnungen der einzelnen Nummern beinhaltet, eine falsche Zuweisung von Bezeichner zu Nummer auftreten.

Der Erfindung liegt daher die Aufgabe zugrunde, eine SIM-Karte mit einer Datenstruktur zu schaffen, die ein hierarchisches Telefonbuch ermöglicht, wobei die SIM-Karte und deren Datenstruktur abwärts kompatibel sein müssen.

Die Aufgabe wird durch den Gegenstand des Anspruchs 1 gelöst. Bevorzugte Ausführungsformen der Erfindung sind Gegenstand der Unteransprüche.

Die erfindungsgemäße SIM-Karte für Mobiltelefone enthält ein auf der SIM-Karte angeordnetes Feld von ADN-und/oder FDN-Datensätzen entsprechend der GSM-Spezifikation zur Speicherung von Telefonbucheinträgen, wobei ein ADN-Datensatz (FDN-Datensatz) einen Sektor beinhaltet, der auf einen ersten Erweiterungs-Datensatz referenziert. Im einfachsten Fall weist der aus drei Sektoren bestehende erste Erweiterungs-Datensatz in seinem ersten Sektor eine Kennung auf, die ihn als einen "hierarchischen" Datensatz kennzeichnet, und der Erweiterungs-Datensatz verweist auf eine oder mehrere weitere Datenstrukturen, die die hierarchische Ordnung der Telefonbucheinträge definieren. Es ist auch möglich, daß der erste Erweiterungs-Datensatz noch kein hierarchischer Datensatz ist. In diesem Fall verweist der erste Erweiterungs-Datensatz auf einen weiteren zweiten Erweiterungs-Datensatz, der durch seinen ersten Sektor als "hierarchisch" gekennzeichnet ist. Weiter folgende Erweiterungs-Datensätze, die sich, eventuell über eine Kette von Erweiterungs-Datensätzen, auf diesen ersten "hierarchischen" Erweiterungsdatensatz beziehen, sind ebenfalls von "hierarchischen" Typus. Allgemein ausgedrückt läßt sich die Verkettung folgendermaßen darstellen: Zu einem ADN-oder FDN-Datensatz eines entsprechenden Feldes kann es eine Folge von N Erweiterungs-Datensätzen geben, wobei N eine natürliche Zahl größer Null ist, so daß ein n-ter Erweiterungs-Datensatz mit n ∈ {0,..., N-1} auf den (n+1)-ten Erweiterungs-Datensatz referenziert, wobei der Datensatz für n = 0 mit dem ADN- bzw. FDN- Datensatz identisch ist, mindestens ein k-ter Erweiterungs-Datensatz mit k ∈ {1,..., N} als hierarchischer Erweiterungs-Datensatz gekennzeichnet ist und alle weiteren j-ten Erweiterungs-Datensätze mit j ∈ {k+1,..., N} ebenfalls "hierarchische Erweiterungs-Datensätze sind.

Im folgenden wird der hierarchische Erweiterungs-Datensatz beschrieben, wobei ein hierarchischer Erweiterungs-Datensatz einen Kennzeichnungs-Sektor, einen Erweiterungsdaten-Sektor und einen Referenz-Sektor aufweist. Dabei ist der Erweiterungsdaten-Sektor aus den Untersektoren Typ-Feld, Referenz-Feld und einem weiteren dritten Sektor aufgebaut. Der Untersektor Referenz-Feld umfaßt eine vorbestimmte Anzahl von Subadressen, wobei jede Subadresse auf eine weitere Datenstruktur verweist und der Typ der Subadresse durch das Typ-Feld festgelegt wird. Der Erweiterungsdaten-Sektor besteht vorzugsweise aus dem Untersektor Typ-Feld von 2 Bytes Länge, 8 Subadressen von jeweils 1 Byte Länge und einem Unter-Sektor, der zur späteren Verwendung reserviert ist, von 1 Byte Länge.

Die genannten weiteren Datenstrukturen umfassen mindestens ein Unternummern-Feld und/oder ein Gruppen-Feld. Ein Datensatz eines Unternummern-Feldes umfaßt einen Bezeichner der Nummernart und eine Nummer. Ein Datensatz eines Gruppen-Feldes umfaßt einen Bezeichner des Gruppennamens und einen Referenz-Sektor, wobei ein Referenz-Sektor auf eine Obergruppe verweist.

Die einen Verweis beinhaltende Subadresse verweist je nach Typ der Subadresse, die durch das Typ-Feld festgelegt wird, auf einen Datensatz eines Unternummern-Feldes oder den eines Gruppen-Feldes.

Bevorzugte Ausführungsformen der Erfindung werden nachfolgend anhand der Zeichnungen erläutert.
Fig. 1 zeigt ein Beispiel für Einträge mit mehreren dazugehörigen Nummern bzw. Bezeichnern,
Fig. 2 zeigt ein Beispiel für Gruppierungen der Einträge in Gruppen,
Fig. 3 zeigt die Realisierung der Datenstruktur einer SIM-Karte für den Fall der Fig. 1, und
Fig. 4 zeigt die Realisierung der Datenstruktur einer SIM-Karte für die Kombination der Fälle der Figuren 1 und 2.

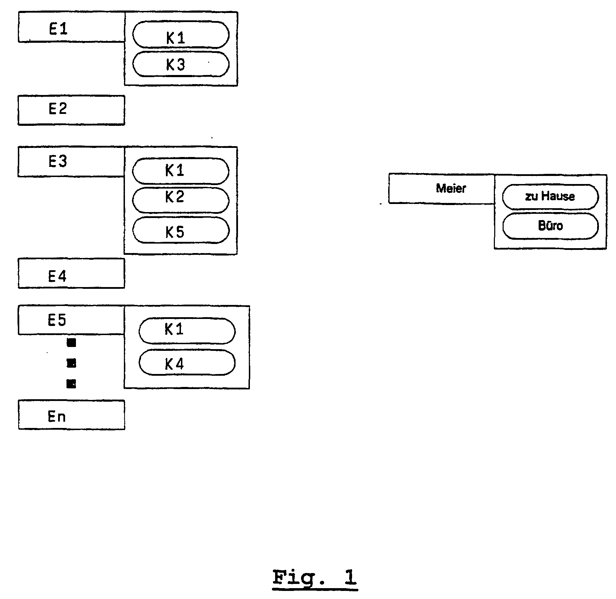

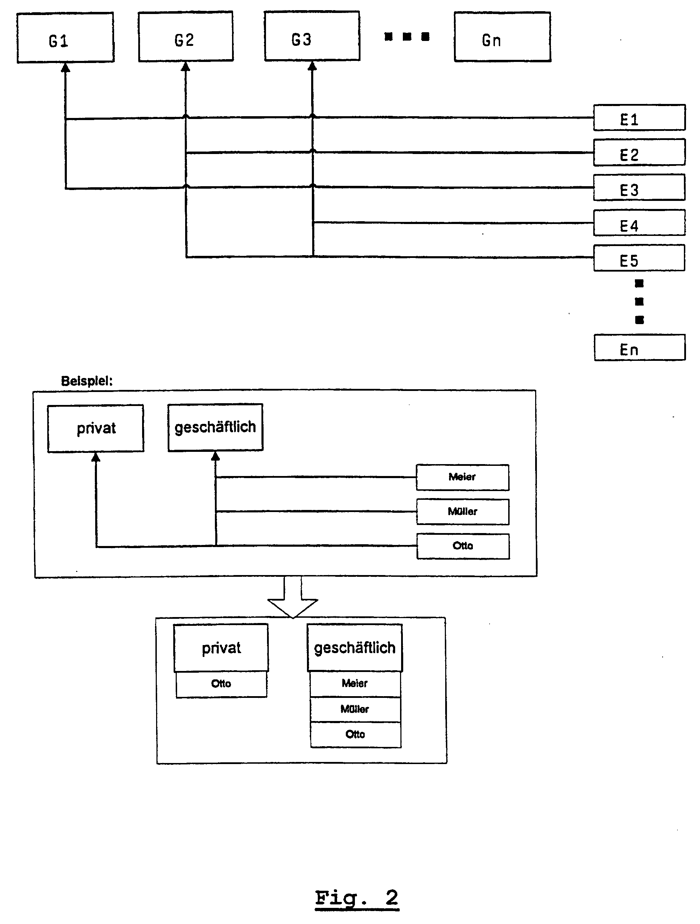

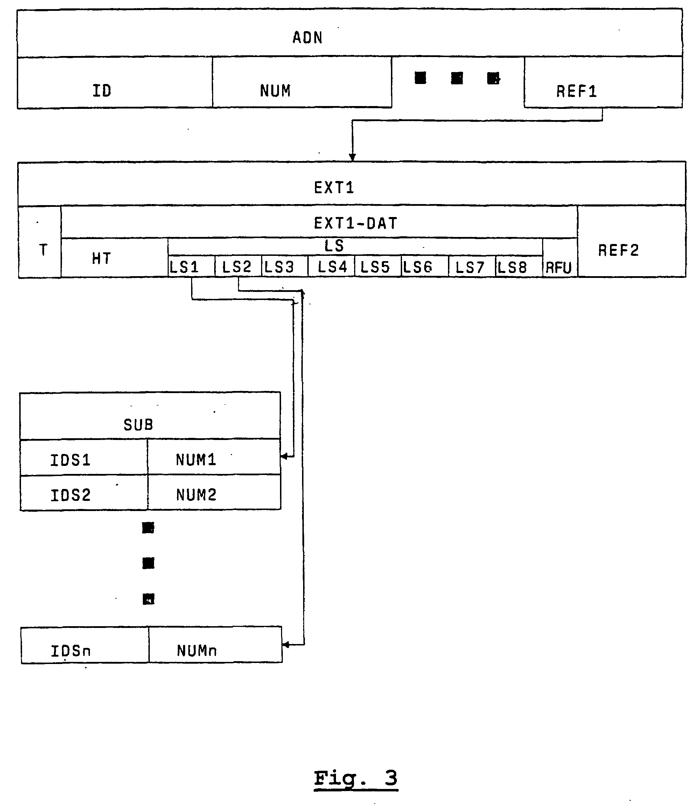

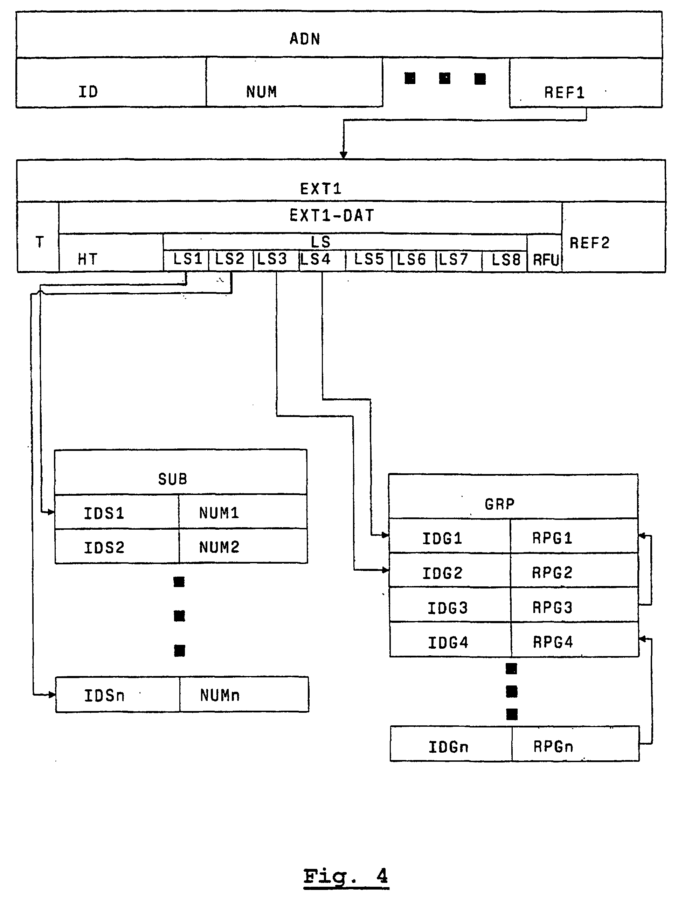

Die Figuren 1 und 2 zeigen Beispiele, die die Erweiterung der SIM-Struktur verdeutlichen sollen. Dabei verdeutlicht Fig. 1 das Konzept des Eintrags mit mehreren dazugehörigen Nummern bzw. Bezeichnern, während Fig. 2 das Konzept von Gruppeneinträgen zum Gegenstand hat. Diese beiden Konzepte werden auf der SIM-Karte miteinander verschmolzen, wie dies aus der Realisierung der Datenstrukturen hervorgeht, die in den Figuren 3 und 4 dargestellt sind.

Wie Fig. 1 zeigt, kann es hier zu jedem Eintrag nicht nur eine, sondern mehrere zugeordnete Telefonnummern geben. Den Nummern wird vom Benutzer ein Bezeichner zugeordnet, beispielsweise Handy, zu Hause, Büro, etc. Dieser Bezeichner kann je nach User-Interface vordefiniert oder frei wählbar sein. Dargestellt ist dies in der Fig. 1 dadurch, daß zu jedem Eintrag eine oder mehrere Kategorien zugeordnet sind, wobei nicht notwendigerweise zu jedem Eintrag eine Kategorie gehören muß. So gehört zu dem Eintrag E1 die Kategorien K1 und K3, während dem Eintrag E2 keine Kategorie zugeordnet ist. Entsprechend dem linken Teil der Fig. 1 können Einträge E1 bis En vorhanden sein, denen entsprechende Kategorien zugeordnet sind. Im Beispiel des rechten Teils der Fig. 1 gehören zu dem Eintrag Meier die Kategorien "zu Hause" und "Büro".

Fig. 2 zeigt das Konzept der Gruppeneinträge, wo es möglich ist, Gruppen mit frei wählbaren Namen anzulegen, denen dann bereits bestehende oder neue Einträge wie Namen oder Nummern zugeordnet werden können. Auf diese Weise ist es beispielsweise möglich, alle Mitarbeiter einer bestimmten Firma in der Gruppe mit dem Namen der Firma zu speichern, was eine leichtere Auffindbarkeit ermöglicht.

Im oberen Teil der Fig. 2 ist dieser Sachverhalt schematisch dargestellt. Es sind Gruppen G1, G2 bis Gn vorhanden, denen Einträge E1 , E2 bis En beliebig zugeordnet werden können. Beispielsweise sind der Gruppe G1 die Einträge E1 und E3, der Gruppe G2 die Einträge E2 und E5, und der Gruppe G3 die Einträge E4 und E5 zugeordnet. Es ist daher ersichtlich, daß Einträge auch zu mehreren Gruppen gehören können.

Der untere Teil der Fig. 2 zeigt ein Beispiel des Gruppenkonzepts. Dargestellt sind die Gruppen "Privat" und "Geschäftlich". Zu der Gruppe "Privat" gehört nur der Eintrag "Otto", während zu der Gruppe "Geschäftlich" die Einträge "Meier", Müller" und "Otto" gehören. Unterhalb des reinen Verknüpfungszusammenhangs ist eine Visualisierung der Zugehörigkeit skizziert.

Fig. 3 zeigt die Datenstruktur auf einer SIM für den Fall der Fig. 1, wobei der Einfachheit und Übersichtlichkeit halber nur eine Folge bestehend aus einem Erweiterungs-Datensatz EXT1 dargestellt ist. Auf einer SIM ist entsprechend der GSM-Spezifikation 11.11, Version 5.0.0 vom Dezember 1995 ein linear strukturierter Datensatz ADN bestehend aus einer vorgegebenen Anzahl von Sektoren definiert, der mit einem Bezeichner-Sektor ID vorgegebener Länge beginnt und dessen letzter Sektor ein Referenzsektor REF1 ist, der auf einen ersten Erweiterungs-Datensatz EXT1 verweist. Im allgemeinen ist der Referenzsektor REF1 ein Byte lang, d.h. er enthält eine Sprungadresse, die auf den ersten Erweiterungs-Datensatz EXT1 verweist, falls ein Erweiterungs-Datensatz benötigt wird. Dieser erste Erweiterungs-Datensatz EXT1 weist ebenfalls eine lineare Struktur auf und besteht aus einer vorbestimmten Anzahl von Sektoren. Gemäß der genannten GSM-Spezifikation umfaßt ein Erweiterungs-Datensatz EXT1 13 Bytes, wobei in der bevorzugten Ausführungsform der Datensatz EXT1 drei Sektoren umfaßt, nämlich einen ersten Sektor Datensatztyp T mit einer Länge 1 Byte, einen zweiten Sektor Erweiterungsdaten EXT1-DAT mit einer Länge von 11 Bytes und einem dritten Sektor Referenzdaten REF2 mit einer Länge von 1 Byte. Der Sektor Referenzdaten REF2 verweist gegebenenfalls auf einen weiteren Erweiterungs-Datensatz REF2, der ebenfalls vom Typus "hierarchische" Daten ist, wenn der verweisende Erweiterungs-Datensatz EXT1 "hierarchisch" ist.

Der Sektor Datensatztyp T enhält die Information, daß es sich bei dem Erweiterungsdatensatz EXT1 um einen Datensatz des neuen Typs "Hierarchische Verknüpfungen" handelt. Ein älteres Mobiltelefon, das nicht über die Erweiterung der SIM-Datenstruktur für hierarchische Telefonbucheinträge verfügt, interpretiert daher aufgrund der Kodierung des ersten Sektors T den Erweiterungsdatensatz EXT1 als unbekannt, so daß die Abwärtskompatibilität gesichert ist.

Der zweite Sektor Erweiterungsdaten EXT1-DAT ist wiederum in drei Untersektoren gegliedert. Der erste, zwei Bytes lange Untersektor Typ-Feld HT beinhaltet hierarchische Typdaten, der zweite, acht Byte lange Sektor Link LS enthält acht Subadressen LS1 bis LS8 von jeweils einer Länge von 1 Byte, und der dritte, 1 Byte lange Untersektor RFU ist für spätere Zwecke reserviert.

Die Subadressen LS1, ..., LS8 des Untersektors Link LS verweisen auf entsprechende Datensätze in einem Unternummern-Feld SUB, wobei ein Datensatz des Unternummern-Feldes SUB aus einem Bezeichner der Nummernart IDS1,..., IDSn und einer dazugehörigen Nummer NUM1,..., NUMn besteht. Im dargestellten Beispiel verweist beispielsweise die Subadresse LS1 auf den Datensatz IDS1, NUM1 und die Subadresse LS2 auf den Datensatz IDSn, NUMn des Unternummernfeldes SUB.

Der Untersektor Typ-Feld HT, der die Information über den Typ der Subadressen LS1,..., LS8 enthält, unterscheidet in diesem ersten Schritt nur zwischen "Verweis auf eine Unternummer" und "Kein Verweis", d.h. in dem ersten Untersektor wird festgelegt, ob eine Subadresse LS1,..., LS8 einen Verweis auf das Unternummernfeld SUB enthält oder nicht.

Ferner kann über den dritten Sektor REF2 des ersten Erweiterungsdatensatzes EXT1 auf einen nächsten (zweiten) Erweiterungsdatensatz (nicht dargestellt) verwiesen werden, falls der erste Erweiterungsdatensatz EXT1 nicht ausreicht. Eine darüber hinausgehende Erweiterung ist natürlich möglich. Die Bildung einer derartigen Folge von aufeinander verweisender Erweiterungs-Datensätze ist im vorangegangenen allgemeinen Beschreibungsteil erläutert worden.

Die Datensätze des Feldes Unternummern SUB sind ähnlich dem ADN-Datensatz aufgebaut, enthalten jedoch keinen Verweis auf einen Erweiterungsdatensatz.

Ein Unternummerdatensatz IDSi, NUMi, i = 1,..., 8, des Unternummernfeldes SUB gibt im allgemeinen eine neue Unternummer an, beispielsweise "dienstlich": +498972224795. Enthält ein Unternummern-Datensatz keinen Wählstring (Telefonnummer), so kann der alleinstehende Bezeichner IdSi (z.B. "Privat") als eine nähere Beschreibung des verweisenden entsprechenden Eintrages angesehen werden.

Fig. 4 zeigt nun die Erweiterung des SIM Datensatzes der Fig. 3 um die in der Fig. 2 dargestellte Gruppenstruktur. Auch hier verweist der dritte Sektor REF1 des ADN/FDN-Datensatzes ADN auf einen ersten Erweiterungs-Datensatz EXT1, der die oben anhand der Fig. 3 erklärte Struktur hat. Allerdings hat hier der Untersektor Typ-Feld HT, der den Typ der nachfolgenden Subadresse LS1,..., LS8 festlegt, eine erweiterte Bedeutung. Eine Subnummer LS1,..., LS8 kann im erweiterten Fall je nach ihrer Festlegung im Untersektor Typ-Feld HT auf einen Datensatz IDSi, NUMi, i ∈ {1,...,8}, eines Unternummernfeldes SUB oder einen Datensatz IDGi, RPGi, i ∈ {1,...,8}, eines Gruppenfeldes GRP verweisen. Dabei enthält der Sektor IDGi, i ∈ {1,...,8}, einen Bezeichner des Gruppennamens und der Sektor RPGi, i ∈ {1,...,8}, einen Verweis auf eine Obergruppe. Der X Bytes umfassende Bezeichner IDGi , i ∈ {1,..., n}, einer Gruppe kann eine beliebige Bezeichnung der Gruppe enthalten, während der auf eine Obergruppe verweisende Verweis RPGi, i ∈ {1,...,n}, ein Byte lang ist. Dadurch können die Gruppen hierarchisch gegliedert werden. Eine oberste Gruppe (Toplevel-Gruppe) ergibt sich daraus, daß der entsprechende Verweis RPGi, i ∈ 1,...,n, auf Null gesetzt ist. Beispielhaft sind in der Fig. 4 Verweise von dem Gruppenreferenz-Sektor RPGn nach RPG4 und von RPG3 nach RPG1 eingezeichnet.

Bei dem Untersektor Typ-Feld HT im Erweiterungsdatensatz EXT1 kann daher nun zwischen "Verweis auf Unternummer", "Verweis auf Gruppe" und "kein Verweis" unterschieden werden. Durch den Verweis auf einen oder mehrere Einträge im neuen Feld "Gruppe" GRP wird ein Eintrag einer Gruppe oder mehreren Gruppen zugewiesen.

Die oben erläuterten Maßnahmen zum Erweitern der SIM auf hierarchische Telefonbücher gilt nicht nur für ADN-Datensätze sondern in der gleichen Form für FDN-Datensätze (FDN = Fixed Diatling Number, siehe genannte GSM-Spezifikation). Da bei dem erfindungsgemäßen Konzept niemals von einem Erweiterungs-Datensatz auf einen ADN- oder FDN-Eintrag verwiesen wird und deshalb kein eindeutiger Bezeichner benötigt wird, ist zu erwarten, daß bei der Änderung des Eintrags (Name, Nummer an einem festgelegten Speicherplatz) durch ein Telefon, das die erweiterte Struktur nicht unterstützt( im folgenden als "altes Telefon" bezeichnet), die Beziehung trotzdem erhalten bleibt. Beim Umkopieren des Eintrags wird der Verweis auf den Erweiterungs-Datensatz mitkopiert. Allerdings könnte bei einem alten Telefon der Verweis auf den Erweiterungsdatensatz überschrieben werden, beispielsweise wenn in einem alten Telefon die Nummer eines hierarchischen Eintrages so erweitert wird, daß sie einen Erweiterungsdatensatz benötigt. Um daher die Abwärtskompatibilität sicherzustellen, kann eine Prüfprozedur bereitgestellt werden, die die SIM nach nicht referenzierten Erweiterungs-Datensätzen und deren zugehörigen Feldern durchsucht und eine entsprechende Fehlerbehandlung veranlaßt.

### Bezugszeichenliste

- E1 - En: Eintrag
- K1 - Kn: Kategorie
- G1 - Gn: Gruppe
- ADN: ADN-oder FDN-Datensatz
- ID: Bezeichner
- NUM: Nummer
- REF1: Verweis
- EXT1: Erster hierarchischer Erweiterungs-Datensatz
- EXT2: Zweiter hierarchischer Erweiterungs-Datensatz
- T: Typ des Erweiterungs-Datensatzes
- EXT1-DAT: Erweiterungsdaten
- HT: Typ-Feld
- LS: Link-Feld
- LS1 - LS8: Subadressen
- RFU: Reserve
- REF2: Verweis auf weiteren Erweiterungs-Datensatz
- SUB: Unternummern-Feld
- IDS1 - IDSn: Bezeichner des Nummerntyps
- NUM1 - NUMn: Nummer
- GRP: Gruppen-Feld
- IDG1 - IDGn: Bezeichner des Gruppennamens
- RPG1 - RPGn: Verweis auf Obergruppe

## Patentansprüche

1. SIM-Karte für Mobiltelefone mit einem auf der SIM-Karte angeordneten Feld von ADN- und/oder FDN-Datensätzen (ADN) zur Speicherung von Telefonbucheinträgen, wobei ein ADN/FDN-Datensatz (ADN) einen Sektor (REF1) beinhaltet, der auf einen aus drei Sektoren bestehenden ersten Erweiterungs-Datensatz (EXT1) referenziert, der in seinem ersten Sektor (T) eine Kennung enthält, so daß eine aufeinander verweisende Erweiterungs-Datensatzkette aus mindestens einem Erweiterungs-Datensatz gebildet werden kann,
**dadurch gekennzeichnet, daß**
in der geordneten Kette von aufeinander verweisenden Erweiterungs-Datensätzen der erste Erweiterung-Datensatz (EXT1) in seinem ersten Sektor (T) eine Kennung enthält, die ihn als einen hierarchischen Datensatz kennzeichnet, und der hierarchische Erweiterung-Datensatz (EXT1) auf eine oder mehrere weitere Datenstrukturen (SUB, GRP) referenziert, die die hierarchische Ordnung der Telefonbucheinträge definieren.

2. SIM-Karte nach Anspruch 1, **dadurch gekennzeichnet, daß** alle von dem ersten hierarchischen Erweiterungs-Datensatz (EXT1) in der Kette abhängigen weiteren Erweiterungs-Datensätze (EXT2) ebenfalls eine hierarchische Typ-Kennung aufweisen.

3. SIM-Karte nach Anspruch 1 oder 2, **dadurch gekennzeichnet, daß** der hierarchische Erweiterungs-Datensatz (EXT1) aus dem Kennzeichnungs-Sektor (T), dem Erweiterungsdaten-Sektor (EXT1-DAT)und einem Referenz-Sektor (REF2) aufgebaut ist.

4. SIM-Karte nach Anspruch 3, **dadurch gekennzeichnet, daß** der Erweiterungsdaten-Sektor (EXT1-DAT) aus den Untersektoren Typ-Feld (HT), Link-Feld (LS) und einem weiteren dritten Sektor (RFU) aufgebaut ist.

5. SIM-Karte nach Anspruch 4, **dadurch gekennzeichnet, daß** der Untersektor Link-Feld (LS) aus einer vorbestimmten Anzahl von Subadressen (LS1,..., LS8) besteht, wobei jede Subadresse auf eine der weiteren Datenstrukturen (SUB, GRP) verweist und der Typ der Subadresse (LS1,..., LS8) durch das Typ-Feld (HT) festgelegt wird.

6. SIM-Karte nach Anspruch 5, **dadurch gekennzeichnet, daß** das Typ-Feld (HT) eine Länge von 2 Bytes Länge hat, .das Link-Feld (LS) aus 8 Subadressen (LS1,...,LS8) von jeweils 1 Byte besteht, und dass der zusätzliche Untersektor (RFU) eine Länge von 1 Byte hat.

7. SIM-Karte nach einem der vorangegangenen Ansprüche, **dadurch gekennzeichnet, daß** die weiteren Datenstrukturen aus mindestens einem Unternummern-Feld (SUB) und/oder einem Gruppen-Feld (GRP) bestehen.

8. SIM-Karte nach Anspruch 7, **dadurch gekennzeichnet, daß** ein Datensatz eines Unternummern-Feldes (SUB) aus einem Bezeichner (IDS1,..., IDSn) der Nummernart und einer Nummer (NUM1, NUMn) besteht.

9. SIM-Karte nach Anspruch 7, **dadurch gekennzeichnet, daß** ein Datensatz eines Gruppen-Feldes (GRP) aus einem Bezeichner (IDG1,..., IDGn) des Gruppennamens und einem Referenz-Sektor (RPG1,..., RPGn) besteht, wobei der Referenz-Sektor auf eine Obergruppe verweist.

10. SIM-Karte nach einem der Ansprüche 8 oder 9, **dadurch gekennzeichnet, daß** eine, einen Verweis beinhaltende Subadresse (LS1,..., LS8) je nach Typ der Subadresse auf einen Datensatz eines Unternummern-Feldes (SUB) oder eines Gruppen-Feldes (GRP) verweist.

## Claims

1. SIM card for mobile telephones having a field of ADN and/or FDN data records (ADN), arranged on the SIM card, for storing directory entries, an ADN/FDN data record (ADN) containing a sector (REF1) which references a first extension data record (EXT1), which comprises three sectors and contains an identifier in its first sector (T), such that it is possible to form a chain for extension data records referencing one another from at least one extension data record, **characterized in that** in the ordered chain of extension data records referencing one another the first extension data record (EXT1) contains in its first sector (T) an identifier which identifies it as a hierarchical data record, and the hierarchical extension data record (EXT1) references one or more further data structures (SUB, GRP) which define the hierarchical order of the directory entries.

2. SIM card according to Claim 1, **characterized in that** all other extension data records (EXT2) dependent on the first hierarchical extension data record (EXT1) in the chain likewise have a hierarchical type identifier.

3. SIM card according to Claim 1 or 2, **characterized in that** the hierarchical extension data record (EXT1) is constructed from the identifier sector (T), the extension data sector (EXT1-DAT) and a reference sector (REF2).

4. SIM card according to Claim 3, **characterized in that** the extension data sector (EXT1-DAT) is constructed from the subsectors type field (HT), link field (LS) and a further third sector (RFU).

5. SIM card according to Claim 4, **characterized in that** the subsector link field (LS) comprises a predetermined number of subaddresses (LS1, ..., LS8), each subaddress referring to one of the further data structures (SUB, GRP), and the type of the subaddress (LS1, ..., LS8) being fixed by the type field (HT).

6. SIM card according to Claim 5, **characterized in that** the type field has a length of 2 bytes and the link field (LS) comprises 8 subaddresses (LS1, ..., LS8) of in each case 1 byte, and **in that** the additional subsector (RFU) has a length of 1 byte.

7. SIM card according to one of preceding claims, **characterized in that** the further data structures comprise at least one subnumber field (SUB) and/or a group field (GRP).

8. SIM card according to Claim 7, **characterized in that** a data record of a subnumber field (SUB) comprises an identifier (IDS1, ..., IDSn) of the number type and a number (NUM1, NUMn).

9. SIM card according to Claim 7, **characterized in that** a data record of a group field (GRP) comprises an identifier (IDG1, ..., IDGn) of the group name, and a reference sector (RPG1, ..., RPGn), the reference sector referring to an overgroup.

10. SIM card according to one of Claims 8 or 9, **characterized in that**, depending on the type of subaddress, a subaddress (LS1, ..., LS8) containing a reference refers to a data record of a subnumber field (SUB) or a group field (GRP).

## Revendications

1. Carte SIM destinée à des téléphones portables comportant un champ, disposé sur la carte SIM, d'enregistrements ADN et/ou FDN (ADN) et prévue pour la mémorisation d'inscriptions dans le répertoire téléphonique, un enregistrement ADN/FDN (ADN) renfermant un secteur (REF1) qui renvoie à un premier enregistrement d'extension (EXT1), composé de trois secteurs et renfermant, dans son premier secteur (T), une identification si bien qu'on peut former, à partir d'au moins un enregistrement d'extension, une chaîne d'enregistrements d'extension qui font des renvois les uns vers les autres,
**caractérisée par le fait**
**que**, dans la chaîne ordonnée des enregistrements d'extension qui font des renvois les uns vers les autres, le premier enregistrement d'extension (EXT1) renferme, dans son premier secteur (T), une identification qui le caractérise comme enregistrement hiérarchique et l'enregistrement hiérarchique d'extension (EXT1) renvoie à une ou plusieurs autres structures de données (SUB, GRP), qui définissent l'ordre hiérarchique des inscriptions dans le répertoire téléphonique.

2. Carte SIM selon la revendication 1 **caractérisée par le fait que** tous les autres enregistrements d'extension (EXT2), qui dépendent dans la chaîne du premier enregistrement hiérarchique d'extension (EXT1), comportent également une identification hiérarchique de type.

3. Carte SIM selon la revendication 1 ou 2 **caractérisée par le fait que** l'enregistrement hiérarchique d'extension (EXT1) est constitué du secteur de caractérisation (T), du secteur de données d'extension (EXT1-DAT) et d'un secteur de référence (REF2).

4. Carte SIM selon la revendication 3 **caractérisée par le fait que** le secteur de données d'extension (EXT1-DAT) est constitué des sous-secteurs champ de type (HT), champ de liaison (LS) et d'un autre et troisième secteur (RFU).

5. Carte SIM selon la revendication 4 **caractérisée par le fait que** le sous-secteur champ de liaison (LS) se compose d'un nombre prédéterminé de sous-adresses (LS1, ..., LS8), chaque sous-adresse renvoyant à une des autres structures de données (SUB, GRP) et le type de la sous-adresse (LS1, ..., LS8) étant défini par le champ de type (HT).

6. Carte SIM selon la revendication 5 **caractérisée par le fait que** le champ de type (HT) a une longueur de 2 octets, le champ de liaison (LS) se compose de 8 sous-adresses (LS1, ..., LS8) de chacune 1 octet et que le sous-secteur supplémentaire (RFU) a une longueur de 1 octet.

7. Carte SIM selon l'une des revendications précédentes **caractérisée par le fait que** les autres structures de données se composent d'au moins un champ de sous-numéros (SUBI et/ou d'un champ de groupes (GRP).

8. Carte SIM selon la revendication 7 **caractérisée par le fait qu'**un enregistrement d'un champ de sous-numéros (SUB) se compose d'un indicateur (IDS1, ..., IDSn), du genre du numéro et d'un numéro (NUM1, NUMn).

9. Carte SIM selon la revendication 7 **caractérisée par le fait qu'**un enregistrement d'un champ de groupes (GRP) se compose d'un indicateur (IDG1, ...., IDGn) du nom de groupe et d'un secteur de référence (RPG1, ..., RPGn), le secteur de référence renvoyant à un groupe de rang supérieur.

10. Carte SIM selon l'une des revendications 8 ou 9 **caractérisée par le fait qu'**une sous-adresse (LS1, ..., LS8), qui renferme un renvoi, renvoie, suivant le type de la sous-adresse à un enregistrement d'un champ de sous-numéro (SUB) ou d'un champ de groupe (GRP).
